# EUROPEAN PATENT SPECIFICATION

(11) **EP 3 812 164 B1**
(45) Date of publication and mention of the grant of the patent: **30.11.2022**
(21) Application number: 20193867.7
(22) Date of filing: 01.09.2020
(51) Int. Cl.: B60B 15/28, B60B 17/00

(54) **ELASTIC WHEEL NOISE REDUCTION DAMPER AND ASSEMBLY AND INSTALLATION METHOD THEREFOR**
ELASTISCHER RADGERÄUSCHVERMINDERUNGSDÄMPFER UND MONTAGE- UND EINBAUVERFAHREN DAFÜR
AMORTISSEUR DE RÉDUCTION DU BRUIT DE ROUES ÉLASTIQUES ET ENSEMBLE ET SON PROCÉDÉ D'INSTALLATION

(30) Priority: 25.10.2019 CN 201911022043
(43) Date of publication of application: 28.04.2021
(73) Proprietor: Zhuzhou Times New Material Technology Co., Ltd., Zhuzhou, Hunan 412007 (CN)
(72) Inventor: Zha, Guotao, Zhuzhou, Hunan 412007 (CN); Hu, Jinchang, Zhuzhou, Hunan 412007 (CN); Wang, Xinlong, Zhuzhou, Hunan 412007 (CN); Fu, Rong, Zhuzhou, Hunan 412007 (CN); He, Caichun, Zhuzhou, Hunan 412007 (CN); Tu, Fengchen, Zhuzhou, Hunan 412007 (CN); Hu, Weihui, Zhuzhou, Hunan 412007 (CN); Xianglong, Xiao, Zhuzhou, Hunan 412007 (CN); Yan, Yao, Zhuzhou, Hunan 412007 (CN)
(74) Representative: Güclü, Ilyas

(56) References cited:
- EP-A1- 0 065 157
- CN-A- 104 455 148
- CN-U- 203 246 259
- CN-U- 207 291 491

## Description

### Technical Field

The present invention relates to an elastic wheel noise reduction damper and an assembly and installation method therefor, and belongs to the field of elastic wheel vibration and noise reduction.

### Background

Since the tram project is planned in cities, elastic wheels are widely used. Elastic wheels can effectively reduce wheel-rail noise, wheel-rail impact and wheel-rail wear, and extend the service life of lines and vehicles. Elastic wheels can greatly reduce noise through internal rubber elastomers, but still cannot meet the requirements of cities with stricter noise emission requirements. In order to further reduce noise, especially to eliminate squeal noise in curve driving, additional noise reduction measures are required.

At present, the additional noise reduction measures for elastic wheels are mainly divided into two modes: damping ring and damper. In contrast, the former generates friction and energy consumption by the contact interface between the steel ring and the wheel groove, the manufacturing cost is lower, but the noise reduction effect is not ideal; and the latter generates a resonance frequency matching with the modal frequency of the wheel by rationally designing the mass and stiffness of steel plates, transfers the wheel vibration energy and consumes energy through the damping material between the steel plates, thus having a better noise reduction effect. It is found through literature search that in the prior arts (DE202006012852U1, CN104455148A and CN206406693U), the damping fin is slit along the tangent direction of the arc at the inner side of the sector, formed of two thin steel plates bonded together, riveted by rivets and fixed on the wheel through bolts, and wheel rolling causes the damping plate to resonate and consume energy. The disadvantages are: CD the damping fin has small thickness, light weight, small damping, narrow noise reduction frequency band, limited capability of transferring and consuming energy and a general noise reduction effect; ② the damping fin is directly fixed on the wheel by bolts, and is prone to failure due to small thickness, low structural strength and large stress on joints with the bolts; and ③ after being slit, the damping fin presents a structure of pieces of cantilever plates, only the root is fixed, and the suspended part has large immunity during resonance, so the fatigue resistance is low.

Therefore, the technical problem to be urgently solved by those skilled in the art is how to reduce the vibration and radiation noise of the elastic wheel more effectively and ensure the installation reliability and structural fatigue durability of the additional noise reduction device.

### Summary

The elastic wheel noise reduction damper and the assembly and installation method therefor provided by the present invention enable most of the mass of the damper to fully resonantly deform, greatly increasing the quantity of resonant frequencies of the damper, the vibration absorption frequency bandwidth and the energy transfer consumption efficiency; The overall cantilever structure of the damper and a plurality of independent cantilever resonance branches formed on the slit plate can produce different resonance characteristics, increasing the quantity of resonance frequencies, and can be designed to match the axial modal frequency of the elastic wheel tyre, which effectively reduces the squeal noise generated by the elastic wheel during driving on small curve sections and helps to improve the noise reduction reliability and durability.

To achieve the above purpose, the present invention adopts the following technical solution:
An elastic wheel noise reduction damper, comprises an annular transition plate fitted and fixed to the side of the tyre and a damper body rigidly connected with the annular transition plate and axially spaced from the side of the tyre, and is characterized in that the damper body comprises metal plates successively stacked and rubber damping layers filled between the metal plates, the plurality of metal plates are fixedly connected by rivets and also connected with the annular transition plate by rivets, and the riveting force of the rivets does not act on the rubber damping layers.

Preferably, the metal plate comprises base plates having an arc shape and uniformly distributed at intervals along the circumferential direction of the annular transition plate and connecting plates sandwiched between the adjacent base plates, the rubber damping layers are filled between the adjacent base plates, and the base plates, the connecting plates and the annular transition plate are fixedly connected into a whole by rivets and connected with the tyre by screws.

Preferably, the quantity of the rubber damping layers is at least two, the outermost or innermost base plate is a slit plate with a plurality of through-hole slits which cut the slit plate in the radial direction to form a plurality of cantilever resonance branches, and the thickness is increased layer by layer from the base plates to the slit plate.

Preferably, the connecting plates sandwiched between the adjacent base plates are annular connecting plates coaxially aligned with the annular transition plate, the connecting plates sandwiched between the base plates and the slit plate are strip-shaped connecting plates, the annular transition plate, the base plates and the annular connecting plates are fixed by rivets, and the base plates, the strip-shaped connecting plates and the slit plate are also fixed by rivets.

Preferably, the annular connecting plates are located on the radial outer side of the rubber damping layer of the same layer, the annular transition plate has the same inner diameter and outer diameter as the annular connecting plates, and the strip-shaped connecting plates are located in the middle position of the rubber damping layer of the same layer.

Preferably, the through-hole slits are arc-shaped long slits opened from the end edge of the slit plate in the circumferential direction, the through-hole slits opened from the edges of both ends of the slit plate are circumferentially separated, and the inner ends of the through-hole slits in the slit plate are circular hole ends and close to the strip-shaped connecting plates.

Preferably, the radial width of the slit plate is smaller than that of each base plate, each base plate has the inner diameter equal to the slit plate and the outer diameter larger than the slit plate, the base plate adjacent to the slit plate has arc-shaped slits which are located in the radial outer side of the slit plate, screws pass through the base plates, the annular connecting plates and the annular transition plate to be connected with threaded holes in the side of the tyre, and the heads of the screws are sunk in the base plates.

Preferably, the quantity of the rubber damping layer is one, each connecting plate is in a ring shape, and two base plates are both riveted with mass blocks.

The assembly and installation method for the elastic wheel noise reduction damper comprises the following steps:
1. Determining the natural frequency parameters of the elastic wheel noise reduction damper according to the main frequency of vibration and noise during the operation of the elastic wheel and each order of axial modal frequency of the tyre to match with the axial modal frequency of the tyre;
2. Determining the quantity, shape, size, mass and material of the metal layers in the damper body and the elastic modulus of the rubber damping layers according to the natural frequency parameters of the elastic wheel noise reduction damper, the axial modal mass of the tyre and the installation space size;
3. Assembling the damper body according to the determined performance parameters of the damper body, first fixedly connecting the plurality of metal plates by rivets, filling the rubber damping layers between the metal plates to form the damper body, then coaxially and fixedly connecting the damper body and the annular transition plate by rivets to form the elastic wheel noise reduction damper, and finally installing the elastic wheel noise reduction damper on the side of the tyre.

Preferably, "determining the quantity, shape, size, mass and material of the metal layers in the damper body" in step 2 refers to: determining the arc size, thickness and material of the base plates, the spacing distance of the adjacent base plates, and the position of the slit plate, the quantity, the radial position size and the arc size of through-hole slits.

The present invention has the following beneficial effects:
1. In the elastic wheel noise reduction damper of the present invention, the damper body and the side surface of the tyre are separated by the annular transition plate to form a whole resonant cantilever structure, the plurality of metal plates in the damper body are fixedly connected by rivets and also connected with the annular transition plate by rivets, and the rubber damping layers are filled between the metal plates so that the mass layers formed in the damper body have rigid connection and elastic connection, the wheel vibration can be quickly transmitted and transferred to each mass layer of the damper through the rigid connection body to enable most of the mass of the damper to fully resonantly deform, and meanwhile, the bending elasticity of the elastic wheel noise reduction damper and the material elasticity of the rubber damping layers are used, greatly increasing the quantity of resonant frequencies of the damper, the vibration absorption frequency bandwidth and the energy transfer consumption efficiency.
2. The plurality of metal plates are riveted and then compounded with the rubber damping layers, increasing structural damping and vibration absorption mass, and forming a combination solution of metal plate cantilever stiffness and rubber stiffness, and the overall cantilever structure of the damper body and the plurality of independent cantilever resonance branches formed on the slit plate can produce different resonance characteristics, increasing the quantity of resonance frequencies, and can be designed to match the axial modal frequency of the elastic wheel tyre, which effectively reduces the squeal noise generated by the elastic wheel during driving on small curve sections.
3. The required natural frequency of the damper is designed according to the axial modal frequency of the tyre, the slit plate is specially slit along the circumferential direction of the wheel according to the required natural frequency, and the slit plate is split into a plurality of cantilever resonant branch structures which are connected with the base plates through the rubber damping layers. Compared with the tangential slitting and cantilever suspension solution in the prior art, the present invention can greatly improve the structural damping and strength of the resonant branches, which is beneficial to improve noise reduction reliability and durability.
4. In the present invention, the plurality of metal plates and the annular transition plate are fixed by rivets first, the rubber damping layers are filled between the metal plates to form the whole damper, and then the damper is connected to the wheel by bolts to ensure that the noise reduction damper can perform the vibration and noise reduction function normally. The rivets and the screws only act on the rigid layers not on the elastic layers. Compared with the prior art that the elastic layers of the damper are also directly fixed on the wheel together with the rigid layers through screws, the present invention can effectively improve the structural reliability and stability of connection between the damper and the wheel, and effectively and quickly transmit the resonance to each base plate through the screws, the rivets and the connecting plates, thus realizing that most of the mass of the damper fully resonantly deforms.

### Description of Drawings

Fig. 1 is a section view of connection between the elastic wheel noise reduction damper and the tyre in embodiment 1.
Fig. 2 is another section view of connection between the elastic wheel noise reduction damper and the tyre in embodiment 1.
Fig. 3 is a top view of the elastic wheel noise reduction damper installed on the tyre.
Fig. 4 is a local top view of the elastic wheel noise reduction damper.
Fig. 5 is a local top view of the elastic wheel noise reduction damper with slits.
Fig. 6 is a section view of connection between the elastic wheel noise reduction damper and the tyre in embodiment 2.

In the figures: 1. annular transition plate, 2. damper body, 3. metal plates, 31. base plates , 32. connecting plates, 32.1. annular connecting plates, 32.2. strip-shaped connecting plates, 33. through-hole slits, 34. slit plate, 35. arc-shaped slits, 4. rubber damping layers, 5. rivets, 6. screws, 7. mass blocks, 100. tyre.

### Detailed Description

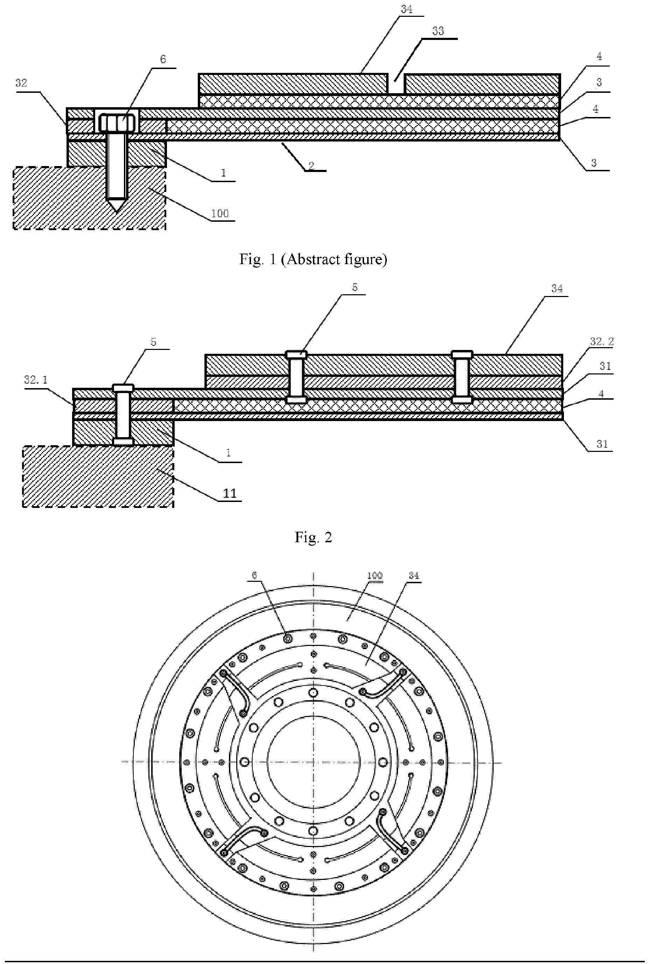

Embodiments of the present invention are described in details below in combination with Fig. 1 to Fig. 6.

### Embodiment 1:

An elastic wheel noise reduction damper, comprises an annular transition plate 1 fitted and fixed to the side of the tyre and a damper body 2 rigidly connected with the annular transition plate 1 and axially spaced from the side of the tyre, and is characterized in that the damper body 2 comprises metal plates 3 successively stacked and rubber damping layers 4 filled between the metal plates 3, the plurality of metal plates 3 are fixedly connected by rivets 5 and also connected with the annular transition plate 1 by rivets 5, and the riveting force of the rivets 5 does not act on the rubber damping layers 4.

As shown in figures, in the elastic wheel noise reduction damper of the present invention, the damper body 2 and the side surface of the tyre 100 are separated by the annular transition plate 1 to form a whole resonant cantilever structure, the plurality of metal plates 3 in the damper body 2 are fixedly connected by rivets 5 and also connected with the annular transition plate 1 by rivets 5, and the rubber damping layers 4 are filled between the metal plates 3 which form mass layers of the damper body 2 so that the mass layers formed in the damper body 2 have rigid connection and elastic connection, the wheel vibration can be quickly transmitted and transferred to the mass layers of the damper through the rigid connection of the annular transition plate 1 and the tyre and the rigid connection of the rivets 5 to the metal plates to enable most of the mass of the damper to fully resonantly deform, and meanwhile, the bending elasticity of the elastic wheel noise reduction damper and the material elasticity of the rubber damping layers are used, greatly increasing the quantity of resonant frequencies of the damper, the vibration absorption frequency bandwidth and the energy transfer consumption efficiency. The plurality of metal plates are riveted and then compounded with the rubber damping layers, increasing structural damping and vibration absorption mass, and forming a combination solution of metal plate cantilever stiffness and rubber stiffness, so the noise reduction effect is higher.

Wherein the metal plate 3 comprises base plates 31 having an arc shape and uniformly distributed at intervals along the circumferential direction of the annular transition plate 1 and connecting plates 32 sandwiched between the adjacent base plates 31, the rubber damping layers 4 are filled between the adjacent base plates 31, and the base plates 31, the connecting plates 32 and the annular transition plate 1 are fixedly connected into a whole by rivets 5 and connected with the tyre by screws 6. The connecting plates 32 are sandwiched between the adjacent base plates 31, which facilitates the rigid connection of the rivets to the base plates 31 and prevents the riveting force of the rivets 5 from acting on the rubber damping layers 4. The arrangement of the connecting plates 32 also separates the screws 6 from the rubber damping layers 4, realizing rigid connection between the damper and the tyre 100, which not only quickly transmits the resonance of the wheel to each base plates 31 through rigid connection, but also realizes that most of the mass of the damper can fully resonantly deform. The rivets 5 and the screws 6 only act on the rigid layers not on the elastic layers. Compared with the prior art that the elastic layers of the damper are also directly fixed on the wheel together with the rigid layers through screws, the present invention can effectively improve the reliability and stability of connection between the damper and the wheel.

Wherein the quantity of the rubber damping layers 4 is at least two, the outermost or innermost base plate 31 is a slit plate 34 with a plurality of through-hole slits 33 which cut the slit plate 34 in the radial direction to form a plurality of cantilever resonance branches, and the thickness is increased layer by layer from the base plates 31 to the slit plate 34. The overall cantilever structure of the damper and a plurality of independent cantilever resonance branches formed on the slit plate 34 can produce different resonance characteristics, increasing the quantity of resonance frequencies, and can be designed to match the axial modal frequency of the elastic wheel tyre, which effectively reduces the squeal noise generated by the elastic wheel during driving on small curve sections.

Wherein the connecting plates 32 sandwiched between the adjacent base plates 31 are annular connecting plates 32.1 coaxially aligned with the annular transition plate 1, the connecting plates 32 sandwiched between the base plates 31 and the slit plate 34 are strip-shaped connecting plates 32.2, the annular transition plate 1, the base plates 31 and the annular connecting plates 32.1 are fixed by rivets 5, and the base plates 31, the strip-shaped connecting plates 32.2 and the slit plate 34 are also fixed by rivets 5. The annular connecting plates 32.1 are sandwiched between the adjacent base plates 31 so that the rigid connection of the upper and lower base plates 31 can be realized, and the strip-shaped connecting plates 32.2 are sandwiched between the base plates 31 and the slit plate 34 so that the rigid connection of the base plates 31 and the slit plate 34 can be realized, which enables the resonance to be effectively transferred along the rigid connection layer and ensures that most of the mass of the damper can fully resonantly deform.

Wherein the annular connecting plates 32.1 are located on the radial outer side of the rubber damping layer 4 of the same layer, the annular transition plate 1 has the same inner diameter and outer diameter as the annular connecting plates 32.1, and the strip-shaped connecting plates 32.2 are located in the middle position of the rubber damping layer 4 of the same layer. The annular connecting plates 32.1 have the same size as and are coaxially aligned with the annular transition plate 1, which is conducive to resonance transfer and convenient for connection of rivets and can form a filling space large enough for the rubber damping layer 4 to ensure the damping characteristics. The strip-shaped connecting plates 32.2 are located in the middle position of the rubber damping layer 4 of the same layer, so that the rivets 5 are located in the middle position of the slit plate 34, i.e., the fixed position of the slit plate 34 is in the middle. When the through-hole slits 33 are opened in both sides of the slit plate 34, i.e., the middle position of the slit plate 34 is used as a supporting point to form a plurality of cantilever resonance branches, so that the slit plate 34 forms a plurality of independent cantilever resonance branches relative to the base plates 31.

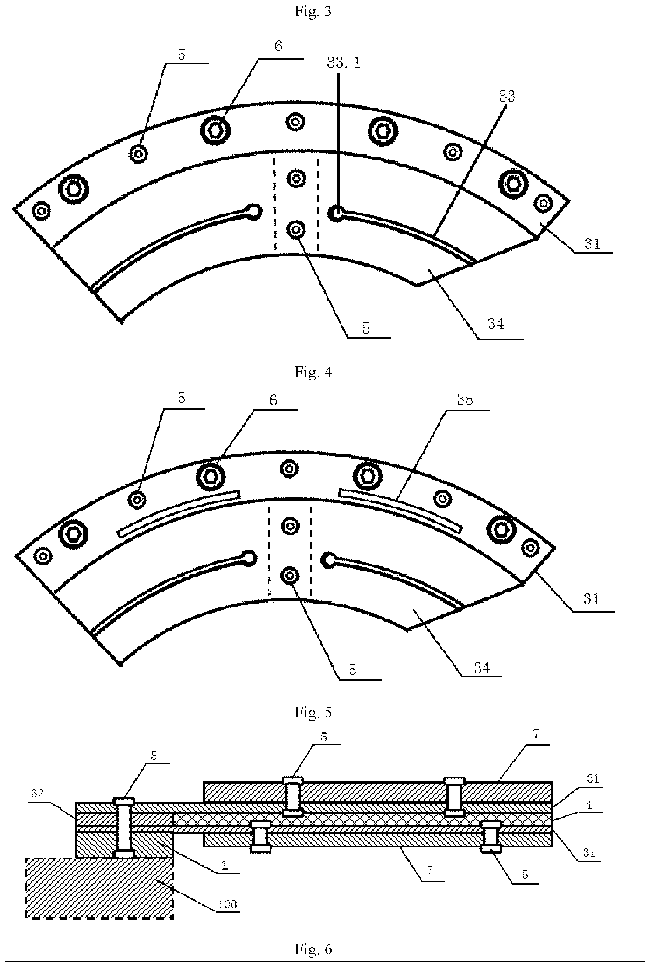

Wherein the through-hole slits 33 are arc-shaped long slits opened from the end edge of the slit plate 33 in the circumferential direction, the through-hole slits 33 opened from the edges of both ends of the slit plate 33 are circumferentially separated, the inner ends of the through-hole slits 33 in the slit plate 34 are circular hole ends 33.1 and close to the strip-shaped connecting plates 32.2, and the circular hole ends 33.1 can effectively prevent the ends of the through-hole slits 33 from cracking due to stress concentration during the resonance process. As shown in Fig. 4, the through-hole slits 33 are opened from the end of the slit plate 34 in the circumferential direction, and the slit plate 34 and the strip-shaped connecting plates 32.2 are connected by the rivets 5 from the middle position, i.e. the slit plate 34 is cut in the radial direction, forming cantilever resonance branches with the middle position where the rivets 5 are located as the supporting point, i.e., a plurality of cantilever resonance branches in the circumferential direction are formed in the slit plate 34 by the cutting of the through-hole slit 33 and the fixed connection of the rivets 5. The quantity and the radial width of the cantilever resonant branches shall be designed according to the natural frequency required by the damper. The damper is installed on the tyre and forms a whole cantilever resonance structure, and the slit plate 34 is a plurality of independent cantilever resonance branches formed on the damper. The damper can generate multiple resonant modal frequencies during working, including: the overall bending resonance frequency generated by the cantilever structure composed of a plurality of base plates 31, the rubber damping layers and a base plate, the resonant frequency generated by one base plate, and the resonant frequency generated by a plurality of cantilever resonant branches formed by the slit plate 34, increasing the quantity of resonant frequencies and broadening the vibration and noise reduction band.

Wherein the radial width of the slit plate 34 is smaller than that of each base plate 31, each base plate 31 has the inner diameter equal to the slit plate 34 and the outer diameter larger than the slit plate 34, the base plate 31 adjacent to the slit plate 34 has arc-shaped slits 35 which are located in the radial outer side of the slit plate 34, screws 6 pass through the base plates 31, the annular connecting plates 32.1 and the annular transition plate 1 to be connected with threaded holes in the side of the tyre, and the heads of the screws 6 are sunk in the base plates 31. The cantilever stiffness of the damper is further adjusted through slits 35 to adjust the natural frequency of the order of the damper. The longer the slits 35 are, the lower the cantilever stiffness of the damper is, and the lower the natural frequency is. The base plates 31, the annular connecting plate 32.1 and the annular transition plate 1 are rigidly connected with the tyre 100 by the screws 6, and the heads are sunk to improve the aesthetics.

The elastic wheel noise reduction damper works as follows: when a train passes, the wheel-rail interaction and the wheel-rail surface roughness excite the natural mode of the elastic wheel tyre and produces severe vibration; on one hand, the vibration energy at the main axial modal frequency of the tyre is quickly transferred to the base plates and the cantilever resonance branches of the slit plate of the damper through the dynamic vibration absorption effect by the whole cantilever structure of the damper and the plurality of independent cantilever resonance branches of the slit plate, which causes the base plates and the resonance branches of the slit plate to resonate greatly at the modal frequency to absorb the vibration energy of the frequency band near the modal frequency; on the other hand, when the structure is bent and deformed, a relative sliding movement occurs between the plurality of base plates and the slit plate, and the viscoelastic damping material generates shear strain to cause loss of a part of mechanical energy, thereby generating a constrained damping effect and converting the vibration energy to thermal energy to be consumed; and finally, the overall equivalent damping of the tyre is significantly improved, and the purpose of reducing the vibration and radiation noise of the elastic wheel tyre is achieved.

### Embodiment 2:

The difference from embodiment 1 is that, as shown in Fig. 6, the quantity of the rubber damping layer 4 is one, each connecting plate 32 is in a ring shape, and two base plates 31 are both riveted with mass blocks 7. That is, no slit plate is arranged in the damper, only two base plates are arranged, and mass blocks 7 are added to greatly enhance the vibration absorption mass of a first-order or second-order frequency, reducing noise for each order of axial modal frequency of the first-order or second-order tyre.

The assembly and installation method for the elastic wheel noise reduction damper comprises the following steps:
1. Determining the natural frequency parameters of the elastic wheel noise reduction damper according to the main frequency of vibration and noise during the operation of the elastic wheel and each order of axial modal frequency of the tyre to match with the axial modal frequency of the tyre;
2. Determining the quantity, shape, dimension, mass and material of the metal layers 3 in the damper body 2 and the elastic modulus of the rubber damping layers 4 according to the natural frequency parameters of the elastic wheel noise reduction damper, the axial modal mass of the tyre and the installation space size;
3. Assembling the damper body according to the determined performance parameters of the damper body 2, first fixedly connecting a plurality of metal plates 3 by rivets 5, filling the rubber damping layers 4 between the metal plates 3 to form the damper body 2, then coaxially and fixedly connecting the damper body 2 and the annular transition plate 1 by rivets 5 to form the elastic wheel noise reduction damper, and finally installing the elastic wheel noise reduction damper on the side of the tyre.

"Determining the quantity, shape, size, mass and material of the metal layers 3 in the damper body 2" in step 2 refers to: determining the arc size, thickness and material of the base plates 31, the spacing distance of the adjacent base plates 1, and the position, the quantity of through-hole slits 33, the radial position size and the arc size of the slit plate 34.

In the assembly and installation method for the elastic wheel noise reduction damper, the required natural frequency of the damper is designed according to the axial modal frequency of the tyre, and the performance parameters of the damper body are specially designed according to the required natural frequency so that the mass layers formed in the damper body have rigid connection and elastic connection, the wheel vibration can be quickly transmitted and transferred to each mass layer of the damper through the rigid connection body to enable most of the mass of the damper to fully resonantly deform, and meanwhile, the bending elasticity of the elastic wheel noise reduction damper and the material elasticity of the rubber damping layers are used, greatly increasing the quantity of resonant frequencies of the damper, the vibration absorption frequency bandwidth and the energy transfer consumption efficiency. The plurality of metal plates are riveted and then compounded with the rubber damping layers, increasing structural damping and vibration absorption mass, and forming a combination solution of metal plate cantilever stiffness and rubber stiffness, and the overall cantilever structure of the damper and the plurality of independent cantilever resonance branches formed on the slit plate can produce different resonance characteristics, increasing the quantity of resonance frequencies, and can be designed to match the axial modal frequency of the elastic wheel tyre, which effectively reduces the squeal noise generated by the elastic wheel driving on small curve sections.

The technical solutions of the embodiments of the present invention are fully described above in combination with the drawings. It should be noted that the described embodiments are merely part of the embodiments of the present invention. Based on the embodiments in the present invention, all other embodiments obtained by those ordinary skilled in the art without contributing creative labor will belong to the protection scope of the present invention.

## Claims

1. An elastic wheel noise reduction damper, comprises an annular transition plate (1) fitted and fixed to the side of a tyre (100) and a damper body (2) rigidly connected with the annular transition plate (1) and axially spaced from the side of the tyre (100), **characterized in that** the damper body (2) comprises metal plates (3) successively stacked and rubber damping layers (4) filled between the metal plates (3), the plurality of metal plates (3) are fixedly connected by rivets (5) and also connected with the annular transition plate (1) by rivets (5), **characterised in that** the riveting force of the rivets (5) does not act on the rubber damping layers (4).

2. The elastic wheel noise reduction damper according to claim 1, **characterized in that** the metal plate (3) comprises base plates (31) having an arc shape and uniformly distributed at intervals along the circumferential direction of the annular transition plate (1) and connecting plates (32) sandwiched between the adjacent base plates (31), the rubber damping layers (4) are filled between the adjacent base plates (31), and the base plates (31), the connecting plates (32) and the annular transition plate (1) are fixedly connected into a whole by rivets (5) and connected with the tyre (100) by screws (6).

3. The elastic wheel noise reduction damper according to claim 2, **characterized in that** the quantity of the rubber damping layers (4) is at least two, the outermost or innermost base plate (31) is a slit plate (34) with a plurality of through-hole slits (33) which cut the slit plate (34) in the radial direction to form a plurality of cantilever resonance branches, and the thickness is increased layer by layer from the base plates (31) to the slit plate (34).

4. The elastic wheel noise reduction damper according to claim 3, **characterized in that** the connecting plates (32) sandwiched between the adjacent base plates (31) are annular connecting plates (32.1) coaxially aligned with the annular transition plate (1), the connecting plates (32) sandwiched between the base plates (1) and the slit plate (34) are strip-shaped connecting plates (32.2), the annular transition plate (1), the base plates (31) and the annular connecting plates (32.1) are fixed by rivets (5), and the base plates (31), the strip-shaped connecting plates (32.2) and the slit plate (34) are also fixed by rivets (5).

5. The elastic wheel noise reduction damper according to claim 4, **characterized in that** the annular connecting plates (32.1) are located on the radial outer side of the rubber damping layer (4) of the same layer, the annular transition plate (1) has the same inner diameter and outer diameter as the annular connecting plates (32.1), and the strip-shaped connecting plates (32.2) are located in the middle position of the rubber damping layer (4) of the same layer.

6. The elastic wheel noise reduction damper according to claim 5, **characterized in that** the through-hole slits (33) are arc-shaped long slits opened from the end edge of the slit plate (34) in the circumferential direction, the through-hole slits (33) opened from the edges of both ends of the slit plate (34) are circumferentially separated, and the inner ends of the through-hole slits (33) in the slit plate (34) are circular hole ends (33.1) and close to the strip-shaped connecting plates (32.2).

7. The elastic wheel noise reduction damper according to claim 3, **characterized in that** the radial width of the slit plate (34) is smaller than that of each base plate (31), each base plate (31) has the inner diameter equal to the slit plate (34) and the outer diameter larger than the slit plate (34), the base plate (31) adjacent to the slit plate (34) has arc-shaped slits (35) which are located in the radial outer side of the slit plate (34), screws (6) pass through the base plates (31), the annular connecting plates (32.1) and the annular transition plate (1) to be connected with threaded holes in the side of the tyre (100), and the heads of the screws (6) are sunk in the base plates (31).

8. The elastic wheel noise reduction damper according to claim 2, **characterized in that** the quantity of the rubber damping layer (4) is one, each connecting plate (32) is in a ring shape, and two base plates (31) are both riveted with mass blocks (7).

9. An assembly and installation method for the elastic wheel noise reduction damper according to any of claim 1 to claim 8, comprises the following steps:
(1). Determining the natural frequency parameters of the elastic wheel noise reduction damper according to the main frequency of vibration and noise during the operation of the elastic wheel and each order of axial modal frequency of the tyre (100) to match with the axial modal frequency of the tyre (100);
(2). Determining the quantity, shape, size, mass and material of the metal layers (3) in the damper body (2) and the elastic modulus of the rubber damping layers (4) according to the natural frequency parameters of the elastic wheel noise reduction damper, the axial modal mass of the tyre (100) and the installation space size;
(3). Assembling the damper body (2) according to the determined performance parameters of the damper body (2), first fixedly connecting the plurality of metal plates (3) by rivets (5), filling the rubber damping layers (4) between the metal plates (3) to form the damper body (2), then coaxially and fixedly connecting the damper body (2) and the annular transition plate (1) by rivets (5) to form the elastic wheel noise reduction damper, and finally installing the elastic wheel noise reduction damper on the side of the tyre (100).

10. The assembly and installation method for the elastic wheel noise reduction damper according to claim 9, **characterized in that** "determining the quantity, shape, size, mass and material of the metal layers (3) in the damper body (2)" in step (2) refers to: determining the arc size, thickness and material of the base plates (31), the spacing distance of the adjacent base plates (31), and the position of the slit plate (34), the quantity, the radial position size and the arc size of through-hole slits (33).

## Patentansprüche

1. Elastischer Radgeräuschdämpfer, umfassend eine ringförmige Übergangsplatte (1), die an der Seite eines Reifens (100) angebracht und befestigt ist, und einen Dämpferkörper (2), der starr mit der ringförmigen Übergangsplatte (1) verbunden und axial von der Seite des Reifens (100) beabstandet ist, **dadurch gekennzeichnet, dass** der Dämpferkörper (2) aufeinander gestapelte Metallplatten (3) und zwischen die Metallplatten (3) gefüllte Gummidämpfungsschichten (4) umfasst, wobei die Vielzahl von Metallplatten (3) durch Nieten (5) fest verbunden sind und auch mit der ringförmigen Übergangsplatte (1) durch Nieten (5) verbunden sind, **dadurch gekennzeichnet, dass** die Nietkraft der Nieten (5) nicht auf die Gummidämpfungsschichten (4) wirkt.

2. Elastischer Radschalldämpfer nach Anspruch 1, **dadurch gekennzeichnet, dass** die Metallplatte (3) bogenförmige Grundplatten (31), die gleichmäßig in Abständen entlang der Umfangsrichtung der ringförmigen Übergangsplatte (1) verteilt sind, und Verbindungsplatten (32), die zwischen den benachbarten Grundplatten (31) angeordnet sind, umfasst, die Gummidämpfungsschichten (4) zwischen den benachbarten Grundplatten (31) gefüllt sind, und die Grundplatten (31), die Verbindungsplatten (32) und die ringförmige Übergangsplatte (1) durch Nieten (5) fest zu einem Ganzen verbunden und durch Schrauben (6) mit dem Reifen (100) verbunden sind.

3. Elastischer Radgeräuschdämpfer nach Anspruch 2, **dadurch gekennzeichnet, dass** die Anzahl der Gummidämpfungsschichten (4) mindestens zwei beträgt, die äußerste oder innerste Grundplatte (31) eine Schlitzplatte (34) mit einer Vielzahl von durchgehenden Schlitzen (33) ist, die die Schlitzplatte (34) in radialer Richtung schneiden, um eine Vielzahl von freitragenden Resonanzzweigen zu bilden, und die Dicke von den Grundplatten (31) zur Schlitzplatte (34) schichtweise erhöht ist.

4. Elastischer Radschalldämpfer nach Anspruch 3, **dadurch gekennzeichnet, dass** die zwischen den benachbarten Grundplatten (31) eingeschlossenen Verbindungsplatten (32) ringförmige Verbindungsplatten (32.1) sind, die koaxial mit der ringförmigen Übergangsplatte (1) ausgerichtet sind, die zwischen den Grundplatten (1) und der Schlitzplatte (34) eingeschlossenen Verbindungsplatten (32) streifenförmige Verbindungsplatten (32. 2), die ringförmige Übergangsplatte (1), die Grundplatten (31) und die ringförmigen Verbindungsplatten (32.1) sind durch Nieten (5) befestigt, und die Grundplatten (31), die streifenförmigen Verbindungsplatten (32.2) und die Schlitzplatte (34) sind ebenfalls durch Nieten (5) befestigt.

5. Elastischer Radgeräuschdämpfer nach Anspruch 4, **dadurch gekennzeichnet, dass** die ringförmigen Verbindungsplatten (32.1) an der radialen Außenseite der Gummidämpfungsschicht (4) der gleichen Schicht angeordnet sind, die ringförmige Übergangsplatte (1) den gleichen Innendurchmesser und Außendurchmesser wie die ringförmigen Verbindungsplatten (32.1) hat und die streifenförmigen Verbindungsplatten (32.2) in der mittleren Position der Gummidämpfungsschicht (4) der gleichen Schicht angeordnet sind.

6. Elastischer Radgeräuschdämpfer nach Anspruch 5, **dadurch gekennzeichnet, dass** die Durchgangsschlitze (33) bogenförmige Langschlitze sind, die von der Endkante der Schlitzplatte (34) in Umfangsrichtung geöffnet sind, die Durchgangsschlitze (33), die von den Kanten beider Enden der Schlitzplatte (34) geöffnet sind, in Umfangsrichtung getrennt sind und die inneren Enden der Durchgangsschlitze (33) in der Schlitzplatte (34) kreisförmige Lochenden (33.1) sind und nahe an den streifenförmigen Verbindungsplatten (32.2) liegen.

7. Elastischer Radschalldämpfer nach Anspruch 3, **dadurch gekennzeichnet, dass** die radiale Breite der Schlitzplatte (34) kleiner ist als die jeder Grundplatte (31), jede Grundplatte (31) den gleichen Innendurchmesser wie die Schlitzplatte (34) und einen größeren Außendurchmesser als die Schlitzplatte (34) aufweist, die an die Schlitzplatte (34) angrenzende Grundplatte (31) bogenförmige Schlitze (35) aufweist, die sich an der radial äußeren Seite der Schlitzplatte (34) befinden, Schrauben (6) durch die Grundplatten (31), die ringförmigen Verbindungsplatten (32. 1) und die ringförmige Übergangsplatte (1), um mit Gewindelöchern in der Seite des Reifens (100) verbunden zu werden, und die Köpfe der Schrauben (6) sind in den Grundplatten (31) versenkt.

8. Elastischer Radgeräuschdämpfer nach Anspruch 2, **dadurch gekennzeichnet, dass** die Menge der Gummidämpfungsschicht (4) eins ist, jede Verbindungsplatte (32) ringförmig ist und zwei Grundplatten (31) jeweils mit Massenblöcken (7) vernietet sind.

9. Montage- und Installationsverfahren für den elastischen Radschalldämpfer nach einem der Ansprüche 1 bis 8, dass die folgenden Schritte umfasst:
(1) Bestimmen der Eigenfrequenzparameter des elastischen Radgeräuschdämpfers entsprechend der Hauptfrequenz von Vibration und Geräusch während des Betriebs des elastischen Rades und jeder Ordnung der axialen Modalfrequenz des Reifens (100), um mit der axialen Modalfrequenz des Reifens (100) übereinzustimmen;
(2) Bestimmen der Anzahl, der Form, der Größe, der Masse und des Materials der Metallschichten (3) im Dämpferkörper (2) und des Elastizitätsmoduls der Gummidämpfungsschichten (4) entsprechend den Eigenfrequenzparametern des elastischen Radgeräuschdämpfers, der axialen modalen Masse des Reifens (100) und der Bauraumgröße;
(3) Zusammenbau des Dämpferkörpers (2) entsprechend den ermittelten Leistungsparametern des Dämpferkörpers (2), wobei zunächst die mehreren Metallplatten (3) durch Nieten (5) fest miteinander verbunden werden und die Gummidämpfungsschichten (4) zwischen die Metallplatten (3) gefüllt werden, um den Dämpferkörper (2) zu bilden, dann koaxiales und festes Verbinden des Dämpferkörpers (2) und der ringförmigen Übergangsplatte (1) durch Nieten (5), um den elastischen Radgeräuschdämpfer zu bilden, und schließlich Anbringen des elastischen Radgeräuschdämpfers an der Seite des Reifens (100).

10. Montage- und Einbauverfahren für den elastischen Radschalldämpfer nach Anspruch 9, **dadurch gekennzeichnet, dass** "Bestimmen der Anzahl, der Form, der Größe, der Masse und des Materials der Metallschichten (3) im Dämpferkörper (2)" in Schritt (2) sich bezieht auf: Bestimmen der Bogengröße, der Dicke und des Materials der Grundplatten (31), des Abstands der benachbarten Grundplatten (31) und der Position der Schlitzplatte (34), der Anzahl, der radialen Positionsgröße und der Bogengröße von Durchgangslochschlitzen (33).

## Revendications

1. Amortisseur réducteur de bruit pour roue élastique, comprenant une plaque de transition annulaire (1) ajustée et fixée sur le côté d'un pneu (100) et un corps d'amortisseur (2) relié de façon rigide à la plaque de transition annulaire (1) et espacé axialement par rapport au côté du pneu (100), **caractérisé en ce que** le corps d'amortisseur (2) comprend des plaques métalliques (3) empilées successivement et des couches d'amortissement en caoutchouc (4) introduites entre les plaques métalliques (3), la pluralité de plaques métalliques (3) étant reliées fixement par des rivets (5) tout en étant également reliées à la plaque de transition annulaire (1) par des rivets (5), **caractérisé en ce que** la force de rivetage des rivets (5) n'agit pas sur les couches d'amortissement en caoutchouc (4).

2. Amortisseur réducteur de bruit pour roue élastique selon la revendication 1, **caractérisé en ce que** la plaque métallique (3) comprend des plaques de base (31) présentant une forme arquée et réparties uniformément à des intervalles le long de la direction circonférentielle de la plaque de transition annulaire (1) et des plaques de liaison (32) prises en sandwich entre les plaques de base (31) adjacentes, les couches d'amortissement en caoutchouc (4) sont introduites entre les plaques de base (31) adjacentes, et les plaques de base (31), les plaques de liaison (32) et la plaque de transition annulaire (1) sont reliées fixement en un ensemble par des rivets (5) et reliées au pneu (100) par des vis (6).

3. Amortisseur réducteur de bruit pour roue élastique selon la revendication 2, **caractérisé en ce que** la quantité de couches d'amortissement en caoutchouc (4) s'élève à au moins deux, la plaque de base (31) la plus extérieure ou la plus intérieure est une plaque fendue (34) avec une pluralité de fentes traversantes (33) coupant la plaque fendue (34) dans la direction radiale pour former une pluralité de branches de résonance en porte-à-faux, et l'épaisseur est augmentée couche par couche, des plaques de base (31) vers la plaque fendue (34) .

4. Amortisseur réducteur de bruit pour roue élastique selon la revendication 3, **caractérisé en ce que** les plaques de liaison (32) prises en sandwich entre les plaques de base (31) adjacentes sont des plaques de liaison annulaires (32.1) alignées coaxialement avec la plaque de transition annulaire (1), les plaques de liaison (32) prises en sandwich entre les plaques de base (1) et la plaque fendue (34) sont des plaques de liaison en forme de bandes (32.2), la plaque de transition annulaire (1), les plaques de base (31) et les plaques de liaison annulaires (32.1) sont fixées par des rivets (5), et les plaques de base (31), les plaques de liaison en forme de bandes (32.2) et la plaque fendue (34) sont également fixées par des rivets (5) .

5. Amortisseur réducteur de bruit pour roue élastique selon la revendication 4, **caractérisé en ce que** les plaques de liaison annulaires (32.1) se trouvent sur le côté extérieur radial de la couche d'amortissement en caoutchouc (4) de la même couche, la plaque de transition annulaire (1) présente le même diamètre intérieur que les plaques de liaison annulaires (32.1), et les plaques de liaison en forme de bandes (32.2) se trouvent à la position médiane de la couche d'amortissement en caoutchouc (4) de la même couche.

6. Amortisseur réducteur de bruit pour roue élastique selon la revendication 5, **caractérisé en ce que** les fentes traversantes (33) sont des fentes longues arquées ouvertes à partir du bord d'extrémité de la plaque fendue (34) dans la direction circonférentielle, les fentes traversantes (33) ouvertes à partir des bords des deux extrémités de la plaque fendue (34) sont séparées circonférentiellement, et les extrémités intérieures des fentes traversantes (33) dans la plaque fendue (34) sont des extrémités de trou circulaires (33.1) et proches des plaques de liaison en forme de bandes (32.2).

7. Amortisseur réducteur de bruit pour roue élastique selon la revendication 3, **caractérisé en ce que** la largeur radiale de la plaque fendue (34) est inférieure à celle de chaque plaque de base (31), chaque plaque de base (31) présente un diamètre intérieur égal à la plaque fendue (34) et un diamètre extérieur supérieur à la plaque fendue (34), la plaque de base (31) adjacente à la plaque fendue (34) présente des fentes arquées (35) situées dans le côté extérieur radial de la plaque fendue (34), des vis (6) traversent les plaques de base (31), les plaques de liaison annulaires (32.1) et la plaque de transition annulaire (1) pour être reliées à des trous filetés dans le côté du pneu (100), et les têtes des vis (6) sont noyées dans les plaques de base (31).

8. Amortisseur réducteur de bruit pour roue élastique selon la revendication 2, **caractérisé en ce que** la quantité de la couche d'amortissement en caoutchouc (4) s'élève à un, chaque plaque de liaison (32) présente une forme annulaire, et deux plaques de base (31) sont toutes deux rivetées avec des blocs de masse (7).

9. Procédé d'assemblage et d'installation pour l'amortisseur réducteur de bruit pour roue élastique selon l'une quelconque des revendications 1 à 8, comprenant les étapes suivantes :
(1). détermination des paramètres de fréquence naturelle de l'amortisseur réducteur de bruit pour roue élastique, en fonction de la fréquence de vibration principale et du bruit pendant le fonctionnement de la roue élastique et de chaque ordre de fréquence modale axiale du pneu (100) de manière à correspondre à la fréquence modale axiale du pneu (100) ;
(2). détermination de la quantité, de la forme, des dimensions, de la masse et du matériau des couches métalliques (3) dans le corps d'amortisseur (2) et du coefficient d'élasticité des couches d'amortissement en caoutchouc (4), en fonction des paramètres de fréquence naturelle de l'amortisseur réducteur de bruit pour roue élastique, de la masse modale axiale du pneu (100) et des dimensions de l'espace d'installation ;
(3). assemblage du corps d'amortisseur (2) en fonction des paramètres de performance déterminés du corps d'amortisseur (2), en reliant tout d'abord la pluralité de couches métalliques (3) fixement à l'aide de rivets (5), en introduisant les couches d'amortissement en caoutchouc (4) entre les plaques métalliques (3) pour former le corps d'amortisseur (2), puis en reliant coaxialement et fixement le corps d'amortisseur (2) et la plaque de transition annulaire (1) à l'aide de rivets (5) pour former l'amortisseur réducteur de bruit pour roue élastique, et en installant finalement l'amortisseur réducteur de bruit pour roue élastique sur le côté du pneu (100).

10. Procédé d'assemblage et d'installation pour l'amortisseur réducteur de bruit pour roue élastique selon la revendication 9, **caractérisé en ce que** la « détermination de la quantité, de la forme, des dimensions, de la masse et du matériau des couches métalliques (3) dans le corps d'amortisseur (2) » dans l'étape (2) fait référence à : la détermination de la taille d'arc, de l'épaisseur et du matériau des plaques de base (31), de la distance d'espacement des plaques de base (31) adjacentes, et de la position de la plaque fendue (34), de la quantité, de la taille de position radiale et la taille d'arc de fentes traversantes (33).
